# EUROPÄISCHE PATENTSCHRIFT

(11) **EP 0 451 304 B1**
(45) Veröffentlichungstag und Bekanntmachung des Hinweises auf die Patenterteilung: **16.02.1994**
(21) Anmeldenummer: 90106708.2
(22) Anmeldetag: 07.04.1990
(51) Int. Cl.: F41H 11/16, B23K 26/00

(54) **Verfahren zur Desintegration von Gegenständen mittels eines Lasers**
Method for desintegrating an object by laser
Procédé pour désintegrer un objet au moyen d'un laser

(43) Veröffentlichungstag der Anmeldung: 16.10.1991
(73) Patentinhaber: Blohm + Voss international GmbH, 20457 Hamburg (DE)
(72) Erfinder: Hoogen, Norbert, Dr.-Ing., D-2056 Glinde (DE); Peix, Wolfgang, Dipl.-Ing., D-2000 Hamburg 74 (DE); Blickle, Klaus, Dr. rer. nat., D-2054 Geesthacht (DE)
(74) Vertreter: Richter, Werdermann & Gerbaulet

(56) Entgegenhaltungen:
- EP-A- 0 027 554
- EP-A- 0 224 719
- GB-A- 2 184 068
- US-A- 3 909 582
- US-A- 4 230 546
- US-A- 4 752 669
- US-A- 4 870 244
- REVUE INTERNATIONALE DE DEFENSE. vol. 22, no. 2, Februar 1989, COINTRIN-GENEVE CH Seite 199 "Little and large"
- WEHRTECHNIK. no. 7, Juli 1976, BONN DE Seiten 22 - 24; g. born: "Laserwaffen-sind sie realisierbar?"
- PATENT ABSTRACTS OF JAPAN, vol. 14, nr. 75 (M0934) February 13, 1990& JP-A -1294047
- DATABASE WPIL, Woche 8604, Derwent Publications Ltd., London, GB AN 86-024329 & JP-A-60245643
- DATABASE WPIL, Woche 8824, Derwent Publications Ltd., London, GB AN 88-165570 & JP-A-63104620

## Beschreibung

Die Erfindung betrifft ein Verfahren zur Desintegration von Sprengsätzen, wie militärischen Minen, bei welchem Verfahren eine Laserlichtquelle mit einer Lichtfarbe im UV-Gebiet eingesetzt wird, die gleichzeitig von nicht-metallischen Teilen, wie Gummierung, Kunststoffe, Wirkladungen von Sprengstoffen, und von den metallischen Teilen absorbiert wird, und bei welchem Verfahren die Laserlichtquelle kontinuierlich mit einer ausreichend hohen mittleren Leistung betrieben wird, um in metallischen Gegenständen thermisch kontrollierte Schmelzvorgänge hervorzurufen. Ein solches verfahren ist durch die US-A-4 870 244 bekannt.

Die Anwendbarkeit des Verfahrens wird nachfolgend am Beispiel der Beseitigung von Minen dargestellt.

Ein bekanntes Kampfmittel als aktives Hindernis, um eine gegnerische Bewegung aufzuhalten, zu verzögern oder unmöglich zu machen, ist die Landmine. Sie wird auch in Zukunft immer ein wichtiges Element der Kampfunterstützung sein. Durch den Einsatz von Elektronik ist nicht nur die Zuverlässigkeit, sondern auch die Wirksamkeit der Minen verbessert worden. Sie wird in zunehmendem Maße durch mechanisierte Werfer oder durch den Abwurf aus der Luft ausgebracht. Eine gezielte Tarnung oder Erdüberdeckung erfolgt nicht mehr. Einfache Räummaßnahmen werden durch eine integrierte Aufnahmesperre und zusätzliche Sensoren verhindert.

Nach dem Stand der Technik sind verschiedene Arten von mechanischen Minenräumsystemen, wie Minenpflüge und/oder Minenwalzen, aber auch explosive Minenräumsysteme bekannt. Traditionelle Systeme, wie z.B. Sprengladungen, Sprengschnüre und -teppiche werden zunehmend ergänzt und teilweise sogar ersetzt durch Kraftstoff-Luft-Explosiv-systeme (FAE-Systeme). Letztere können bereits über 90% aller bekannten Minen mit Druckzünder neutralisieren. Jedoch sind auch FAE-resistente Minen bekannt.,

Moderne Minen sind weitaus schwieriger zu räumen, als dies bei den derzeit benutzten Minen mit Druckzünder der Fall ist. Eine integrierte Aufnahmesperre, die im Bedarfsfall auch abschaltbar ist, verhindert ein einfaches Räumen. Seismische Sensoren schließen das Aufnehmen der Minen von Hand aus. Ein zur Räumung künstlich erzeugtes elektromagnetisches Feld bleibt ohne Wirkung, wenn vorher nicht der richtige Wecksensor angesprochen worden ist. Auch pyrotechnische Räummittel haben gegen moderne Minen kaum noch eine Wirkung, da diese eine hohe Widerstandsfähigkeit gegen An- und Übersprengen haben.

Solche plötzlichen und kräftigen Lageveränderungen, wie sie detonierender Sprengstoff erzeugt, werden von einer bei Landminen eingebauten Schocksperre aufgefangen und die Detonation wird dadurch verhindert. Mechanische Räummittel, wie Roller und Schlagketten, wirken dagegen nur gegen Drucksensoren und können Minen mit Sensorenkombinationen allenfalls zerstören, wobei jedoch eine hohe Risikorate bestehen bleibt. Diese Räummittel sind aber nicht nur sehr langsam und schwerfällig, sondern nach einer bestimmten Anzahl von Minendetonationen auch verschlissen. Die wirkungsvollste Räummethode besteht in der Entfernung des verminten Erdreiches in der gesamten Fahrzeugbreite, indem Erde und Minen nach vorne und seitwärts geschleudert und somit aus dem Weg geräumt werden. Jedoch ist hierzu nicht nur ein hoher technischer Aufwand erforderlich, sondern die Räumgeschwindigkeit ist auch relativ niedrig.

Zu den nach dem Stand der Technik noch sichersten, aber auch besonders gefährlichen und zeitaufwendigen Räum-methoden gehört die Verwendung einzelner Schlagladungen, die von Hand direkt auf oder an die Mine gelegt werden. Diese Räumtechnik ist jedoch für das rasche überwinden von Minensperren gänzlich ungeeignet.

Nach dem Stand der Technik sind auch sogenannte intelligente Landminen bekannt, die mit den herkömmlichen Mitteln nicht gefunden bzw. beseitigt werden können. Diese Art von Landminen besteht aus sehr schwer detektierbaren Materialien, wie z.B. Nichtmetallen, Kunststoffen od.dgl., wobei die Minen unter Umständen zur Tarnung mit ortsüblichen Stoffen überdeckt sind, so beispielsweise mit Pflanzenteilen, Erdmaterial od.dgl..

Auch durch den Einsatz von Mikroelektronik im Bereich des Zündmechanismus nimmt "die Intelligenz der Landminen" zu, so daß traditionelle Mittel bei der Minenräumung versagen. Selbst durch ein flächendeckendes Ansprengen mit Hilfe von Sprengschnüren, Sprengteppichen oder Kraftstoff-Luft-Explositionssystemen lassen sich "intelligente Landminen" nicht immer sicher beseitigen.

Nach der EP-A-0 305 556 ist ein Verfahren zum Erkennen und/oder zur Neutralisation von oberflächenmäßig verlegten oder getarnten Landminen und mobiles Gerät für die Durchführung des Verfahrens bekannt. Das Verfahren ermöglicht das Erkennen und/oder Neutralisieren von oberflächenmäßig verlegten oder getarnten Landminen unter Verwendung eines Laserstrahles, bei dem vermittels des Laserstrahles vorhandene Landminen einer verminten Fläche ohne detonative Zerstörung detektiert werden, wobei der Minensprengstoff bei entsprechend langer Einwirkung bzw. vorgegebener Verweilzeit des Laserstrahls auf die einzelnen Minen zur Verbrennung in sich ohne Detonation gebracht wird und die von der durch die thermische Reaktion des Minensprengstoffs erfolgte Stich- und/oder Gasflamme gebildeten Absorptions- und/oder Emissions- und/oder Remissionsspektren aufgenommen sowie erfaßt werden und die erhaltenen Spektren zur Erkennung des Typs des jeweils in der detektierten Mine verwendeten Sprengstoffs durch vergleichende Messungen eingespeicherter Spektren bekannter Minensprengstoffe für einen Verbleib der erfaßten Minen in dem überprüften Minenfeld oder für eine sich an die spektralanalytische Erfassung der durch Laserstrahlen stimulierten Emission des Minensprengstoffes anschliessende detonative Zerstörung der Mine mit dem Laserstrahl des eingesetzten Laser-Aggregates ausgewertet werden.

Durch die US-A- 48 70 244 ist eine Laservorrichtung zum Schneiden oder Bohren eines entfernten Gegenstandes, wie z.B. einer Munition, bekannt. Das Werkstück wird dabei mit einem ersten CW-Laser zumindest teilweise aufgeschmolzen; mittels eines zweiten Q-geschalteten Lasers wird die Schmelze durch LSD (Laser Supported Detonation) entfernt. Die Designation des Werkstückes aus Metall oder Nichtmetall ist dabei stets mit einem Aufschmelzen, d.h. mit einer thermischen Destruktion, verbunden.

Der Erfindung liegt die Aufgabe zugrunde, ein Verfahren der eingangs genannten Art zu schaffen, das unter Einhaltung eines Sicherheitsabstandes berührungslos und im Abstand von mehreren Metern das Zertrennen oder Zerlegen von Sprengsätzen aus homogenen Werkstoffen, insbesondere aber aus Verbund-Werkstoffen, wie metallischen und nicht-metallischen Werkstoffen, durch Anwendung von Laserstrahlen mit der besonderen Zielsetzung, von dem Sprengsatz ausgehende Gefahren, wie Detonation oder Deflagration bei der Bearbeitung und Entschärfung von solchen Sprengkörpern zu vermeiden, ermöglicht.

Diese Aufgabe wird durch die im Patentanspruch 1 angegebenen Verfahrensmerkmale gelöst.

Das erfindungsgemäße Verfahren ermöglicht unter Einhaltung eines Sicherheitsabstandes berührungslos und im Abstand von mehreren Metern das Zertrennen oder Zerlegen von Sprengsätzen, die aus homogenen Werkstoffen, insbesondere aber aus Verbund-Werkstoffen, wie metallischen und nicht-metallischen Werkstoffen, hergestellt sind, durch Anwendung von Laserstrahlen mit der besonderen Ausrichtung, von dem Sprengsatz ausgehende Gefahren, wie Detonation bzw. Deflagration bei der Bearbeitung, z.B. Entschärfung von Sprengkörpern, zu vermeiden.

Die Einhaltung des Sicherheitsabstandes kann darin bestehen, daß
- das Gerät zur Durchführung des Verfahrens eine fernbediente Betriebsweise erlaubt, bei der die Bedienungsperson sich in einem gesonderten Schutzraum abseits des Gerätes befindet,
- die Bedienungsperson sich in einer Schutzkabine auf dem Gerät befindet und während der Anwendung des Verfahrens keine Schäden erleidet und
- der Laser-Strahl im Sinne des Verfahrens über eine Distanz von der Strahl- und Auskoppeloptik bis zur Bearbeitungsstelle von mehreren Metern, mindestens jedoch 5 m, wirksam wird und auf diese Weise einen ausreichenden Sicherheitsabstand ermöglicht.

Das Verfahren besteht darin, daß eine Laserlichtquelle mit einer Lichtfarbe von Lambda = 200 bis 350 Nanometer, die gleichzeitig sehr stark von den nicht-metallischen Strukturbestandteilen, wie z.B. Gummierungen, Kunststoffe und unter Umständen Wirkladungen von Sprengstoffen, und von möglicherweise vorhandenen metallischen Komponenten absorbiert wird, sowohl kontinuierlich bzw. quasi kontinuierlich mit hohe Pulsfrequenz und hoher mittlerer Leistung betrieben wird, um thermisch kontrollierte Schmelzvorgänge, beispielsweise wie Durchbringen von Metallumhüllungen, hervorzurufen, als auch diskontinuierlich mit sehr hohe Pulsspitzenleistung beispielsweise bei einer Pulsenergie von > 50 Joule, und hohem Taktverhältnis (Pause ./. Puls) zur Vermeidung thermischer Beeinflussung, und um durch hochenergetische, gepulste Bestrahlung die nicht-metallischen Strukturbauteile durch örtlich eng begrenzte, d.h. im Bereich von Spaltweiten von weniger als 1 mm bis 0,01 mm liegende Energieeinwirkung in Form von Stoßwellenerosion, begleitet von partieller physikalischer Destabilisierung der molekularen Bindungen aufgrund der resonanten Einwirkung der elektromagnetischen Strahlen, zu desintegrieren und zum Teil in seiner chemischen Struktur zu verändern. Beim zuletzt genannten Pulsbetrieb mit sehr hoher Pulsspsitzenleistung erfolgt die Desintegration der nicht-metallischen Anteile auf "kaltem Wege", d.h. hitzesensible Bauteile oder Werkstoffe werden nicht entflammt bzw. Wirkladungen von Sprengkörpern werden nicht ausgelöst.

Mit partieller physikalischer Destabilisierung der molekularen Bindungen wird folgendes zum Ausdruck gebracht:
Insbesondere durch Laserlicht im ultravioletten Bereich von 200 bis 350 Nanometern wird durch Anregen der Moleküle der obersten Deckschicht eines nicht-metallischen Zieles ein "Zerbrechen" der Moleküle erreicht , wodurch die ursprünglichen Festigkeitseigenschaften aufgehoben werden ("physikalische Destabilisierung"). Partiell heißt, die Moleküle der bestrahlten Zone werden nicht vollständig, sondern nur zum Teil - zufallsbedingt - aufgebrochen. Das physikalische Aufbrechen der Moleküle führt zu Moleküle-Fragmenten, die in chemischer Hinsicht von dem Original-Molekül verschieden sind. Für das erfindungsgemäße Verfahren ist die Art der entstehenden Moleküle-Fragmente unerheblich, da keine Stoffumwandlung beabsichtigt ist.

Hitzesensible Bauteile können bei einer thermischen Anregung ihrer selbst zu zusätzlichen Reaktionen wie z.B. Explosionen führen. Als entsprechende Bauteile sind Werkstoffe aus dem Bereich der Sprengmittel und der Waffentechnik anzusehen.

Für die Bearbeitung von nicht-metallischen Werkstoffen mit UV-Licht ( Lambda=200 bis 350 Nanometer) ist eine Pulsenergie von mindestens 1 Joule bei einer Pulsbreite von 30 bis 70 Nanosekunden erforderlich. Diese Lichtfarbe wird zur Zeit nur von Excimerlasern bereitgestellt.

Für die Bearbeitung der nicht-metallischen Werkstoffanteile sollte der Laser im Pulsbetrieb mit hoher Pulsspitzenleistung betrieben werden. Es ist dabei eine Pulsbreite von 200 Nanosekunden oder kürzer vorzuziehen; die Pulsenergie sollte größer sein als 50 Joule. Im Interesse einer geringen Wärmeeinwirkung sollte bei hitzesensiblen Aufgabenstellungen eine Pulsrate von weniger als 5 Hz angewendet werden. Andernfalls kann die Pulsfrequenz höher sein. Für eine optimale Durchtrennung bzw. Abtragung der metallischen Anteile ist eine hohe mittlere Leistung von mindestens 1 kW anwendbar.

Durch einen geeigneten Wechsel zwischen dem Betrieb mit hoher, mittlerer Leistung und dem Pulsspitzenenergie-Mode kann der erosive Effekt des Pulsspitzen-Mode's zum Austreiben der schmelz-flüssigen metallischen Werkstoffzonen genutzt werden, wobei dieser Effekt die gleiche Wirkung wie das Schneidgas beim konventionellen Schneidbrenner mit Lichtbogen oder Gasbrenner hat.

Des weiteren wird eine Pulsenergie von mindestens 1 Joule bei einer Pulsbreite von vorzugsweise 30 bis 70 Nanosekunden und einer Pulsrepetitionsrate von weniger als 5 Hz angewandt. Vorzugsweise wird mit demselben Gerät sowohl eine Pulsenergie von > 50 Joule als auch eine mittlere Dauerleistung von mehr als 2 kW bereitgestellt.

Beim Durchtrennen von metallischen Werkstoffen mit hoher mittlerer Dauerleistung durch kurzfristigen Pulsbetrieb mit kürzest-möglicher Pulsdauer können die aufgeweichten, schmelzflüssigen Werkstoffzonen durch Induzierung von Stoßwellen entfernt werden.

Vorteilhafte Ausgestaltungen der Erfindung sind in den Unteransprüchen gekennzeichnet.

Bei der Beseitigung von Kampfmitteln aufgrund von militärischen oder terroristischen Aktivitäten stellt sich aufgrund der komplexen "Intelligenz" der Sprengmittel zunehmend die Aufgabe, Sprengsätze in-situ zu entschärfen , wobei aufgrund der jeweiligen Positionierung eine Detonation in jedem Fall zu vermeiden ist.

Da derartige Sprengsätze, dazu gehören auch moderne militärische Minen, bei jedem Versuch, ihre Position zu verändern oder sie durch Ansprengen zu beseitigen, sofort detonieren, sind neue Mittel und Maßnahmen erforderlich, um eine in-situ-Entschärfung vornehmen zu können.

Eine Grundanforderung an eine geeignete Problemlösung besteht darin, die Unversehrtheit der beteiligten Personen sicherzustellen. Dies wird durch die Anwendung des erfindungsgemäßen Verfahrens durch den Einsatz des Laserstrahlprinzips in Verbindung mit optischen Elementen zur Strahlführung, -lenkung und -fokussierung erreicht, die einen ausreichenden Sicherheitsabstand erlauben.

Bisher bekannte Verfahren, beispielsweise zur Räumung von Minen und Kampfmitteln, können eine Auslösung der Zündkette nicht mit ausreichender Sicherheit vermeiden, da vergleichbare Systeme mit Lasern arbeiten, die im infraroten Bereich emittieren (CO₂-Gaslaser) und die Auslösung der Zündkette durch Wärmeleitung innerhalb des Sprengmittels erfolgen könnte.

Die Erfindung löst dieses Problem dadurch, daß durch Wahl einer geeigneten Laserwellenlänge und die Anwendung einer geeigneten Betriebsweise die thermische Beanspruchung minimiert wird. Von funktionsbestimmender Bedeutung ist dabei die Abstimmung der Laserlichtfarbe auf die zu bearbeitenden Materialien unter dem Gesichtspunkt einer möglichst hohen Strahlungsabsoprtion.

Für die Desintegration von üblichen Wirkladungen und nicht-metallischen Umhüllungen sind Excimer-Laser, die im UV-Bereich emittieren, geeignet, da hohe Absorptiongsquerschnitte vorhanden sind und auch eine physikalische Desintegration der Wirkladungsmoleküle stattfindet, die zu einer irreversiblen Inaktivierung und Entfestigung des betroffenen Materials führt.

Die ausgekoppelte Strahlenenergie sollte wenigstens im Bereich von mehr als 50 Joule, das Puls zu Pausenverhältnis sollte zur Vermeidung von thermischer Beeinflussung bei typischen Pulszeiten im Nanosekundenbereich möglichst klein sein. Unter dem Gesichtspunkt von Mobilität und Robustheit sind kompakte Geräte, wie Festkörperlaser und auch Halbleiter-Laser, die sich zur Zeit in der Entwicklung befinden, für diesen Einsatz prädestiniert.

Durch die Bestrahlung werden zwei Wirkungen hervorgerufen: In der oberflächennahen Schicht des Sprengsatzes werden durch elektromagnetische Wechselwirkungen - fotochemischer Effekt - Stoßwellen ohne thermische Randerscheinungen initiiert, welche zu einem spontanen Materialabtrag führen, aber benachbarte Bereiche unbeeinflußt lassen. Durch eine gezielte räumliche Steuerung der Einwirkstelle des Laserstrahls über die Materialoberfläche kann auf diese Weise das Material präzise, vergleichbar der Vorgehensweise beim Erodieren, räumlich abgetragen werden. Die Einwirktiefe ist kontrollierbar und kann einige Millimeter betragen. Diese Vorgehensweise kann bei allen nicht-metallischen Werkstoffen angewandt werden.

Bei metallischen Strukturen können diese Effekte nicht beachtet werden. Um jedoch auch die möglicherweise vorhandenen metallischen Verdämmungsgehäuse öffnen zu können, ist es erforderlich, den Blechmantel aufzuschmelzen. Dies erfolgt im Sinne der Erfindung durch den Betrieb der Laserquelle mit hoher mittlerer Leistung und derart abgestimmten Betriebsparametern, daß die thermische Einwirkung auf sensible Bereiche des Gegenstandes auf ein Minimum reduziert wird. Da die Zündkette üblicherweise im räumlichen Zentrum von Sprengkörpern angeordnet ist, kann auch in diesen Fällen bei sorgfältiger Vorgehensweise die Detonation vermieden werden, um in der zweiten Phase, wie voranstehend beschrieben, im Pulsbetrieb die Wirkladung zu desintegrieren. Alternativ zu einem einzigen Laser können jedoch auch zwei separate Laserquellen im CW- oder Pulsbetrieb eingesetzt werden.

## Patentansprüche

1. Verfahren zur Desintegration von Sprengsätzen, wie militärischen Minen, bei welchem Verfahren eine Laserlichtquelle mit einer Lichtfarbe im UV-Gebiet eingesetzt wird, die gleichzeitig von nicht-metallischen Teilen, wie Gummierung, Kunststoffe, Wirkladungen von Sprengstoffen, und von den metallischen Teilen absorbiert wird, und bei welchem Verfahren die Laserlichtquelle kontinuierlich mit einer ausreichend hohen mittleren Leistung betrieben wird, um in metallischen Gegenständen thermisch kontrollierte Schmelzvorgänge hervorzurufen, dadurch gekennzeichnet, daß die Laserlichtquelle eine Lichtfarbe mit 200 bis 350 Nanometer aufweist und zur Vermeidung thermischer Beeinflussung auch gepulst mit einer Pulsenergie von mindestens 1 Joule bei einer Pulsbreite von 30 bis 70 Nanosekunden und einer Pulsrepetitionsrate von weniger als 5 Hz betrieben wird, wobei im gepulsten Betrieb die Ausdehnung des von der Laserlichtquelle erzeugten Laserstrahls zwischen 1 und 0,01 mm liegt um nicht-metallische Gegenstände durch örtlich eng begrenzte Energieeinwirkung in Form von Stoßwellenerosion in Verbindung mit partieller physikalischer Destabilisierung der molekularen Bedingungen aufgrund der resonanten Einwirkung der elektromagnetischen Strahlung des Laserlichtes zu desintegrieren und zum Teil in ihrer chemischen Struktur zu verändern.

2. Verfahren nach Anspruch 1, dadurch gekennzeichnet, daß die Laserlichtquelle sowohl eine Pulsenergie von > 50 Joule als auch eine mittlere Dauerleistung von mehr als 1 kW bereitstellt.

3. Verfahren nach einem der Ansprüche 1 und 2, dadurch gekennzeichnet, daß beim Bearbeiten der metallischen Gegenstände mit hoher mittlerer Dauerleistung durch kurzfristigen Pulsbetrieb mit kürzest-möglicher Pulsdauer die aufgeweichten, schmelzflüssigen Werkstoffzonen durch Induzierung von Stoßwellen entfernt werden.

## Claims

1. Method for disintegrating explosive charges, such as military mines, in which method a laser light source possessing a light coloration within the UV range is employed which is simultaneously absorbed by non-metallic components, such as rubber coatings, plastics, active charges of explosives, as well as by the metallic components, and in which method the laser light source is operated continuously at a sufficiently high mean output in order to give rise to thermally controlled melting processes in metallic objects,
**characterized in that**
the laser light source possesses a light coloration of 200 to 350 nanometers and, so as to avoid a thermal influencing, is also operated in a pulsed manner with a pulse energy of at least 1 joule at a pulse width of 30 to 70 nanoseconds and with a pulse repetition rate of less than 5 Hz, in which case, in the pulsed operation, the extension of the laser beam generated by the laser light source is between 1 and 0.01 mm in order to disintegrate and partially change in their chemical structure by means of a locally narrowly restricted energy effect in the form of shock wave erosion in connection with a partial physical disintegration of the molecular conditions owing to the resonant action of the electromagnetic radiation of the laser light.

2. Method according to Claim 1, **characterized in that** the laser light source makes available both a pulse energy of > 50 joule as well as a mean permanent output of more than 50 kW.

3. Method according to either Claim 1 or 2, **characterized in that**, when acting upon the metallic objects with a high mean permanent output by a short-term pulse operation having the shortest possible pulse duration, the softened molten material zones are removed by means of the induction of shock waves.

## Revendications

1. Procédé pour désintégrer des charges explosives telles que des mines militaires dans lequel une source de lumière laser est utilisée avec une couleur de lumière dans le domaine U.V. qui est simultanément absorbée par des parties non métalliques, telles que caoutchoutage, matières plastiques, charges actives de matières explosives, et par les parties métalliques et dans lequel la source de lumière laser fonctionne continuellement avec une puissance moyenne suffisamment élevée pour provoquer des processus de fusion contrôlés thermiquement dans les objets métalliques, **caractérisé en ce** que la source de lumière laser présente une couleur de lumière de 200 à 350 nanomètres et qu'elle fonctionne, pour éviter une influence thermique, en étant également pulsée avec une énergie d'impulsions d'au moins 1 joule pour une largeur d'impulsions de 30 à 70 nanosecondes et une fréquence de répétition d'impulsions de moins de 5 Hz, l'extension du faisceau laser produit par la source de lumière laser se situant, en fonctionnement pulsé, entre 1 et 0,01 mm pour désintégrer des objets non-métalliques par une influence de l'énergie très limitée localement sous forme d'érosion par ondes de choc en liaison à une déstabilisation physique partielle des conditions moléculaires en raison de l'influence résonante du rayonnement électromagnétique de la lumière laser et d'en modifier en partie la structure chimique.

2. Procédé selon la revendication 1, **caractérisé en ce** que la source de lumière laser met aussi bien à disposition une énergie d'impulsions de plus de 50 joues qu'une puissance continue moyenne de plus d'1 kW.

3. Procédé selon l'une des revendications 1 et 2, **caractérisé en ce** que, pour traitier les objets métalliques avec une puissance continue moyenne élevée par un fonctionnement pulsé de courte de durée avec une durée d'impulsions la plus courte possible, les zones de matériaux en fusion amollis sont enlevées par l'induction d'ondes de choc.
